# EUROPEAN PATENT APPLICATION

(11) **EP 1 675 312 A1**
(43) Date of publication of application: **28.06.2006**
(21) Application number: 05112897.3
(22) Date of filing: 23.12.2005
(51) Int. Cl.: H04L 12/40

(54) **Multi-protocol field device emulator**

(30) Priority: 23.12.2004 US 21968
(71) Applicant: Smar Research Corporation, Holbrook, NY 11741 (US); Endress + Hauser Process Solutions AG, 4153 Reinach (CH)
(72) Inventor: De Souza, Libanio Carlos, 14170-595 Sao Paulo (BR); De Andrade, Daniel Teixeria, 14176-170 Sao Paulo (BR); Cassilolato, Cesar, 14020-120 Sao Paulo (BR); De Souza Leiser Marcos, 14170-720 Sao Paulo (BR); Waldhauser, Dieter Alois, 87471 Durach (DE); Koelblin, Robert, 75939 Loerrach (DE)
(74) Representative: Tetaz, Franck Claude Edouard

(57) **Abstract**

An apparatus and method for allowing at least one second device (112) configured to use a second communication protocol to communicate with at least one first field device (102) configured to use a first communication protocol. The apparatus including a first network communication arrangement (104) configured to communicate with the at least one first field device (102) using the first communication protocol, a second network communication arrangement (114) configured to communicate with the at least one second device (112) using the second communication protocol, and a device emulation processing arrangement (110) configured to emulate the at least one first field device (102) such that the at least one second device (112) may communicate with the emulated at least one first field device (102) using a third communication protocol.

## Description

### FIELD OF THE INVENTION

The present invention relates generally to field devices and systems which use such field devices. In particular, the present invention is directed to field devices, systems and processes in which a field device emulates a field device such that a second device may communicate with the emulated field device using a standard communication protocol.

### BACKGROUND OF THE INVENTION

Conventional systems may include a plurality of field devices, e.g., smart field devices, positioned at various locations on a network. The smart field devices may include a processor, and can be temperature sensors, pressure sensors, flow rate sensors, valves, switches, etc., or combinations thereof. The smart field devices on the network may be communicatively coupled to each other using a particular open smart communication protocol. The particular open smart communication protocol may be a HART™ protocol, a PROFIBUS™ protocol, or a FOUNDATION™ Fieldbus protocol. The use of the particular open smart communication protocol enables smart field devices that are manufactured by different manufactures to be used together in the same network and/or system. The conventional systems also may include a controller communicatively coupled to each of the smart field devices using the particular open smart communication protocol, and a processing arrangement coupled to the controller. Moreover the controller may include a processor, and can receive data from each of the smart field devices. The controller may also transmit the data to the processing arrangement.

In operation, each smart field device may perform a function within the system. For example, a temperature sensor may measure a temperature of a liquid, a pressure sensor may measure pressure within a container, a flow rate sensor may measure a flow rate of the liquid, etc. Similarly, valves and switches may open to allow or increase the flow of the liquid, or may close to stop the flow of the liquid or to decrease the flow rate of the liquid. After the smart field devices obtain measurements of various process parameters, or the valves or switches are opened/closed, the smart field devices may communicate with the controller. For example, the smart field devices may forward the data to the controller, and the controller can implement a control procedure based on the received data. Moreover, the controller may transmit the data to the processing arrangement, such that a user of the processing arrangement may use the data.

Nevertheless, in such conventional systems, multiple networks using different communications protocols may be used in a particular manufacturing facility. Each smart field device in a single network is generally configured to communicate using a single open communication protocol for that network. Consequently, if a user of the conventional system would not be able to easily communicate with devices located in different networks using different communication protocols simultaneously (e.g., if the user wishes to communicate with a field device using the HART™ protocol and a field device using the FOUNDATION™ Fieldbus protocol).

### OBJECTS AND SUMMARY OF THE INVENTION

Therefore, a need has arisen to provide a field device and a system using the field device which overcomes the above-described and other shortcomings of the conventional field devices and systems. One of the advantages of the present invention is that the field device may be configured to communicate using an analog communication protocol, such as the HART™ protocol, or a digital communication protocol, such as the FOUNDATION™ Fieldbus protocol or the PROFIBUS™ protocol, while presenting a network device on another network with the belief/impression that the field devices are configured to communicate using FOUNDATION™ Fieldbus H1 protocol.

One of the objects of the present invention is to allow a network device to communicate with a field device configured to use a particular communication protocol using a standard communication protocol.

Another object of the present invention is to allow a high speed ethernet linking device certified by Foundation Fieldbus emulating H1 field devices in a piece hardware in a parallel manner. From the point of view of a foundation fieldbus configuration device, a non-H1 field device is connected to the control strategy in the same manner as an H1 field device.

According to an exemplary embodiment of the present invention, an apparatus and method for allowing at least one second device configured to use a second communication protocol to communicate with at least one first field device configured to use a first communication protocol. The apparatus including a first network communication arrangement configured to communicate with the at least one first field device using the first communication protocol, a second network communication arrangement configured to communicate with the at least one second device using the second communication protocol; and a device emulation processing arrangement configured to emulate the at least one first field device such that the at least one second device may communicate with the emulated at least one first field device using a third communication protocol. The first communication protocol may be a HART™ protocol, a FOUNDATION™ Fieldbus protocol and a PROFIBUS™ protocol. The second communication protocol may be a high speed ethernet protocol. And the third communication protocol may be a FOUNDATION™ Fieldbus H1 protocol.

Other features and advantages of the present invention will become apparent upon reading the following detailed description of embodiments of the invention, when taken in conjunction with the appended claims.

### BRIEF DESCRIPTION OF THE DRAWINGS

For a more complete understanding of the present invention, the needs satisfied thereby, and the objects, features, and advantages thereof, reference now is made to the following descriptions taken in connection with the accompanying drawings.

Fig. 1 is a block diagram of an exemplary embodiment of a system according to the present invention;

Fig. 2 is a block diagram of an exemplary embodiment of a network gateway device according to the present invention;

Fig. 3 is a flow diagram of an exemplary embodiment of an H1 field device emulator process according to the present invention;

Fig. 4 is a flow diagram of an exemplary embodiment of a device instantiation process according to the present invention;

Fig. 5 is a flow diagram of an exemplary embodiment of a fieldbus message stack services process according to the present invention;

Fig. 6 is a flow diagram of an exemplary embodiment of a function block schedule and execution process according to the present invention; and

Fig. 7 is a flow diagram of an exemplary embodiment of a publisher/subscriber process according to the present invention; and

Fig. 8 is a flow diagram of an exemplary embodiment of a traffic schedule process according to the present invention.

### DETAILED DESCRIPTION

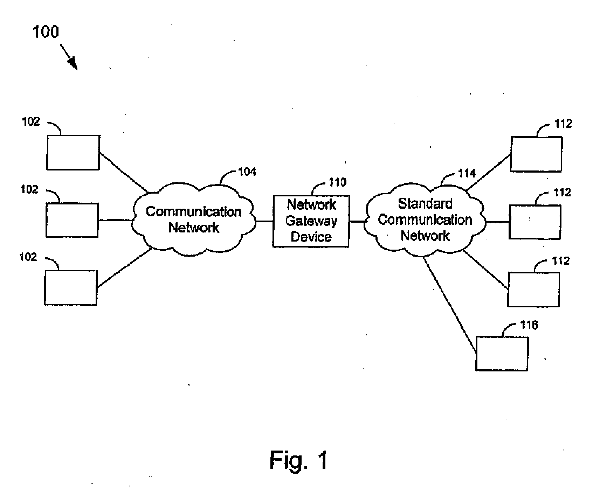

Exemplary embodiments of the present invention and their advantages may be understood by referring to Figs. 1-8, like numerals being used for like corresponding parts in the various drawings.

In particular, as shown in Fig. 1, an exemplary embodiment of a system 100 is provided. The system 100 may include at least one non-H1 field device 102 (e.g., at least one convention smart field device) positioned on a communication network 104, and each non-H1 field device 102 may include a processor (not shown). Each of the non-H1 field devices 102 may be a sensor, a control element, etc. For example, the sensor may be a temperature sensor, a pressure sensor, a flow rate sensor, etc., and the control elements can be a valve, a switch, etc. Moreover, each of the non-H1 field devices 102 may be configured to communicate using an analog communication protocol or a digital communication protocol. For example the analog communication protocol may be a 4-20 mA analog communication protocol, such as a HART™ protocol, and the digital communication protocol may be a FOUNDATION™ fieldbus protocol or a PROFIBUS™ protocol. Nevertheless, it will be understood by those of ordinary skill in the art that each of the non-H1 field devices 102 positioned on the communication network 104 are configured to communicate using the same protocol.

The system 100 also may include at least one network gateway device 110 according to an exemplary embodiment of the present invention. The network gateway device 110 is connected to the communications network 104 and a standard communications network 114. The standard communications network 114 may utilize a digital communications protocol, such as high speed ethernet protocol. The network gateway device 110 allows devices connected to the standard communications network 114 to interface with devices connected to the communications network 104 when the network 114 and the network 104 utilize different communication protocol. The system 100 also includes at least one standard field device 112 positioned on a standard communication network 114, and each standard field device 112 may include a processor (not shown). Each of the standard field devices 112 may be a sensor, a control element, etc. For example, the sensor may be a temperature sensor, a pressure sensor, a flow rate sensor, etc., and the control elements can be a valve, a switch, etc. Moreover, each of the standard field devices 112 may be configured to communicate using an analog communication protocol or a digital communication protocol.

In operation, each of the field devices 102, 112 may perform a function within the system 100. For example, a field device which is a temperature sensor may measure a temperature of a liquid, a field device which is a flow rate sensor may measure a flow rate of a liquid, etc. Similarly, field devices which are a valve or a switch may open to allow for or increase the flow rate of the liquid, or may close to stop the flow of the liquid or to decrease the flow rate of the liquid. Other exemplary operations of field devices are within the scope of the present invention, and should be understood by those of ordinary skill in the art.

The system 100 may also include a controller 116. The controller 116 may have a processor (not shown), and also can be communicatively coupled to each of the field devices 102 via the network gateway device 110 and to each of the field devices 112 via the standard communications network 114.

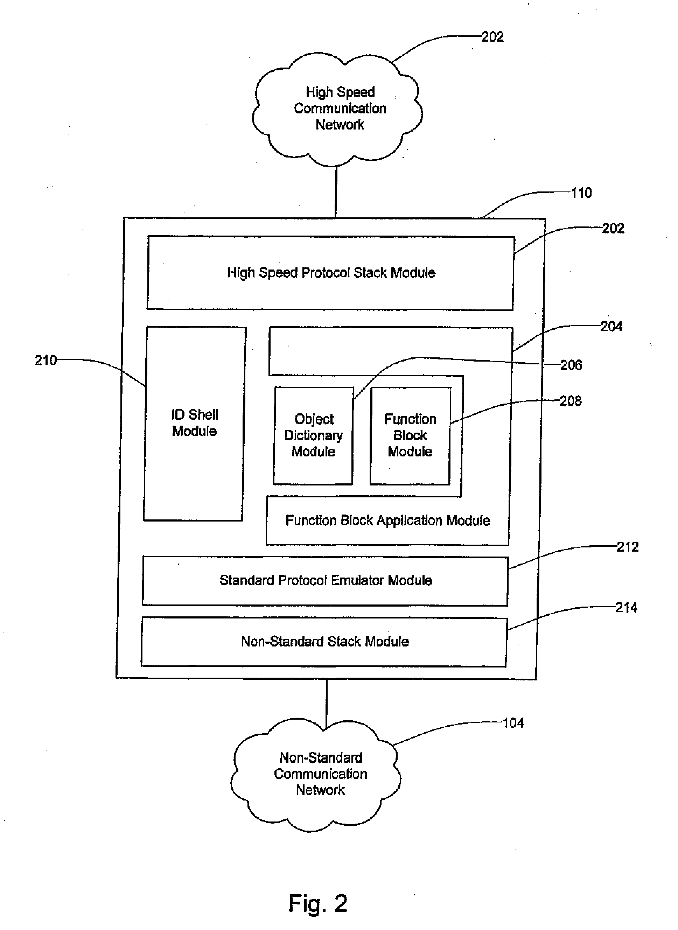

Fig. 2 illustrates a functional block diagram of the network gateway device 110. The network gateway device 110 allows devices connected to the standard communications network 114 to interface with devices connected to the communications network 104 using a standard field device communication protocol when the network 114 and the network 104 utilize different communication protocol. The standard communications network 114 may use a high speed ethernet communications protocol. The communications network 104 may use a HART™ protocol, a PROFIBUS™ protocol, or a FOUNDATION™ FieldBus protocol.

The high speed ethernet stack module includes functional units responsible for the management of the high speed ethernet protocol and ethernet network communication. The ethernet network communication may include internet protocol standards based communication. A more detailed disclosure of an HSE stack module, the function of the FDA agent, NMA, SMK and other elements shown in Fig. 2 are described in greater detail in the Fieldbus Foundation specification, the entire disclosure of which is incorporated herein by reference.

The Interface Device ("ID") shell module is a software component which can be implemented to facilitate the interface between the high speed stack module 202 and the standard protocol emulator module 212 including the exchange of data understandable to each stack module. For example, the ID shell can provide services to access a set of HSE Stack services to perform the functions of the interface device. Some functions of ID device can be managing (i) a live list of all devices, (ii) local access of a set of data or objects, (iii) access of a set of data or objects of the emulated devices, and/or (iv) local configuration that may be used to configure the emulated field devices.

The function block application module 204 provides an interface between both the high speed protocol stack module 202 and the standard protocol emulator module 212 and the object dictionary module 206 and the function block module 208. The object dictionary module 206 stores the local device information, the type of structures used in the local function blocks, along with other relevant information pertaining to network devices. The object dictionary module 206 also includes a standard object dictionary database (not shown), and a VIRTUAL COMMUNICATION RELATIONSHIP database (not shown). For example, the object dictionary module 206 can include description and pointer to all the objects that should be visible through HSE (e.g., Ethernet port). VCR means Virtual Communication Relationship and their description and pointers can also be provided in the object dictionary module 206.

The function block module 208 stores all the function blocks detailing the mechanisms to run the function blocks application. The function block module 208 also includes a function block database (not shown), an acquisition database (not shown) and a device library database (not shown) which can be located in the storage arrangement (e.g., the memory) of a local device.

The standard protocol emulator module 212 allows the network gateway device 110 to reduce many redundant communication layers necessary when using a H1 stack module and associated network, because an H1 network is generally not utilized. The H1 stack module and associated necessary hardware modules are preferably replaced by various processes, including a fieldbus message stack services process, fieldbus schedule and execution process, publisher/subscriber process, traffic schedule process, VIRTUAL COMMUNICATION RELATIONSHIP manager device process, VIRTUAL COMMUNICATION RELATIONSHIP manager local process, device instantiation process and non-fieldbus foundation H1 field device interface process. These processes utilize databases to store information and allow the emulator module 212 of the network gateway device 110 to execute multiple processes representing multiple non-H1 devices in a parallel and time-effective manner. The databases utilized by these processes are the standard object dictionary database, the VIRTUAL COMMUNICATION RELATIONSHIP database, the function block database, the acquisition database and the device library database.

The non-standard stack module 214 includes functional units implementing the foundation fieldbus system architecture. The non-standard stack module 214 may be implemented to interface with a communications network running any one of a multitute of particular communications protocols. The particular communications protocol may be HART™ protocol, PROFIBUS™ protocol, and FOUNDATION™ Fieldbus protocol, as known to those having ordinary skill in the art. It should be understood that non-H1 stack modules are know to those having ordinary skill in the art.

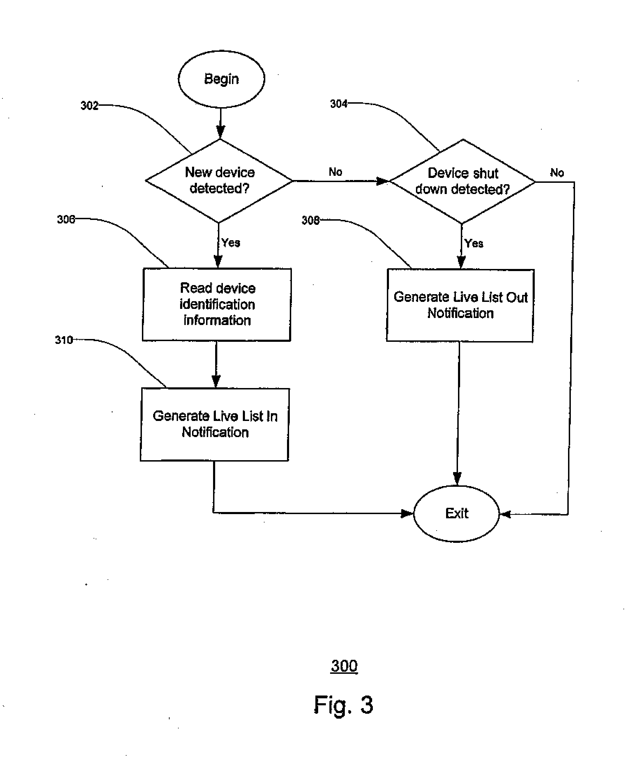

Figs. 3-8 illustrate exemplary processes 300-800 for emulating non-H1 field devices disposed in a non-H1 network as if they were H1 field devices disposed in a H1 network according to the present invention. From the viewpoint of an HSE device, the emulated non-H1 device may appear as an H1 device. The processes 300-800 may be executed in a serial, parallel or hybrid manner. In a hybrid execution scheme, some of the processes 300-800 may execute at the same time, while others of the processes 300-800 may execute in a serial manner. The processes 300-800 automatically instantiate a H1 field device in a H1 field device emulator process 300 when a non-foundation fieldbus H1 field device is connected within the communications network 104. This instantiated H1 field device emulates basic functionalities of a real H1 field device connected in a H1 network while providing appropriate parameters of non-H1 field devices using Foundation Fieldbus function blocks. The non-Foundation fieldbus H1 interface module 212 executes four basic operations: live list maintenance of non-Foundation Fieldbus H 1 field devices, cyclic actualization of the inputs in the acquisition database, cyclic actualization of the non-Foundation Fieldbus H1 field devices with the outputs of the acquisition database, and configuration of the cyclic communication of the non-Foundation Fieldbus H1 field devices. Data can be cyclically updated as defined by the configuration of the control strategy. Control strategy is a term for Function Blocks which are capable of operating together and exchanging process data. This information is stored in the acquisition database, and the non-Foundation Fieldbus H1 interface module utilizes that data to configure the Foundation Fieldbus H1 field devices. The control strategy may be a combination of function block that may transfer data between its output and inputs in order to control the behavior of a process or machine. as described in Fieldbus Foundation Specification - Function Block Application Process, Part 1- FF-890.

The process 300 begins at step 302. In particular, at step 302, the process 300 determines whether a new device is detected as being connected to the communications network 104. If a new device is detected, the process 300 advances to step 306. Otherwise, the process 300 advances to step 304. At step 306, the process 300 can read or obtain identification information sufficient to identify the new device. The identification information may include data such as manufacture identifier, device type, serial number, tag, address, and the like. In step 310, the process 300 generates and transmits a live list-in indication. The live list-in indication identifies the new device added to the communications network 104. The live list-in indication is transmitted to a device instantiation process 400, and the process 300 exits.

At step 304, the process 300 determines whether a device that was in the live list is shut down or removed from the communications network 104. If such a device is shut down or removed, the process 300 advances to step 308. Otherwise, the process 300 exits. At step 308, the process 300 generates and transmits a live list-out indication. The live list-out indication identifies the device in the live list that was shut down or removed from the communications network 104. The live list-out indication is transmitted to the device instantiation process 400.

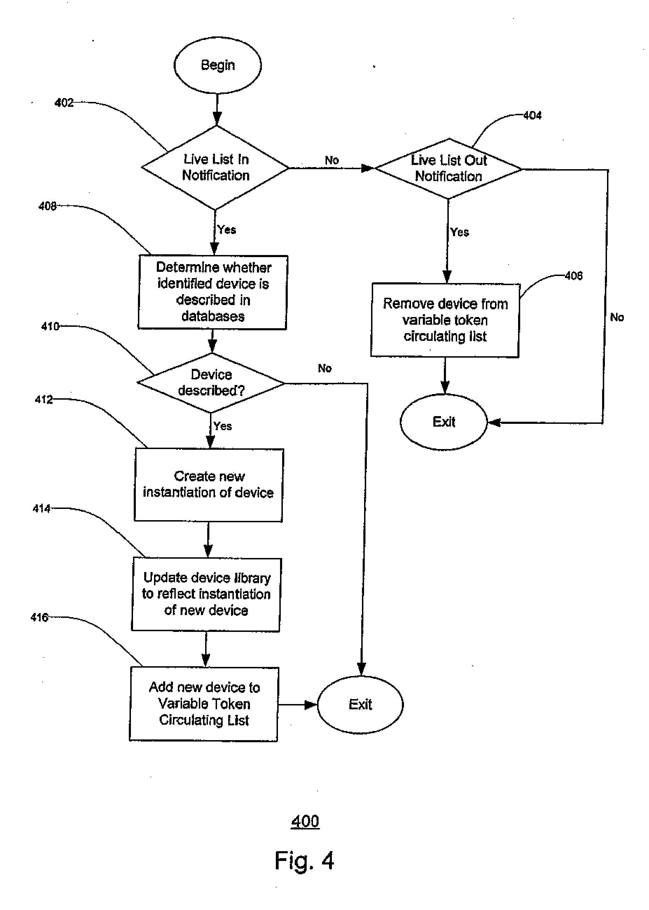

Fig. 4 illustrates an exemplary device instantiation process 400 according to the present invention. The device instantiation process 400 monitors live list-in and live list-out indications and checks for information regarding new non-Foundation Fieldbus H1 field devices in the device library database, the function block database and the standard object dictionary database.

The device instantiation process 400 begins at step 402. At step 402, the process 400 determines whether it has received a live list-in notification. If the process 400 has received a live list-in notification, the device instantiation process 400 advances to step 408 to create a new instantiation of the device, if described, and add the new device to the variable token circulating list. Otherwise, the process 400 advances to step 404.

At step 404, the device instantiation process 400 determines whether it has received a live list-out notification. If the process 400 has not received a live list-out notification, the process 400 exits. Otherwise at step 406, the device instantiation process 400 removes the indicated device(s) from a variable token circulating list. The live list-out indication signifies that the H1 field device emulator process 300 has determined one or more field device(s) connected to the communications network 104 has been removed or shut down. The device instantiation process 400 may receive notification that several devices have been removed or shut down. If so, the process 400 removes each of the indicated devices from the variable token circulating list. Once the process 400 removes the indicated devices from the variable token circulating list, the process 400 exits.

The process 400 searches the acquisition database and function block database to determine whether the new device identified in the live list-in indication is described at step 408. If the new device is described, the process 400 advances to step 412. Otherwise the process 400 exits.

At step 412, the process 400 creates a new instantiation of the device in the acquisition database. When the new device is instantiated, the process 400 advances to step 414. The process 400 updates the device library database to reflect the instantiation of the new device at step 414 and transmits the variable token circulating list an indication concerning the presence of the new device at step 416. The variable token circulating list is a live list mechanism that the IDShell module 210 uses to know about the actual live list status. Once the presence of the new device is reported to the variable token circulating list, the process 400 exits.

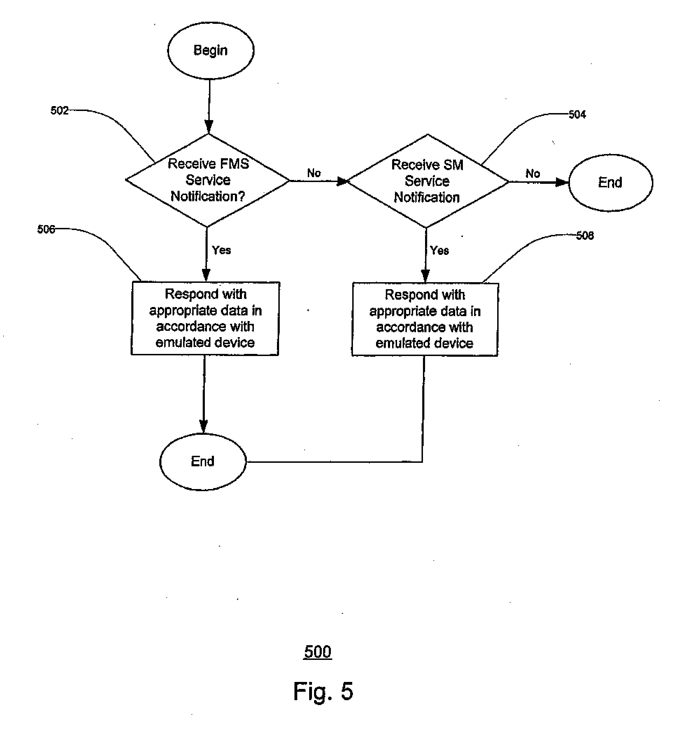

Fig. 5 illustrates a fieldbus message stack services process 500. The fieldbus message stack services process 500 provides responses for fieldbus message stack services, such as read, write, getOD, DomainDownload, and like commands, and for System Management ("SM") services as described in the specification of the Fieldbus Foundation, such as identify, setTag, and similar commands, by reading and updating the standard object dictionary database, the function block database and the VIRTUAL COMMUNICATION RELATIONSHIP database. For example, module 212 of Figure 2 emulates the H1 Stack which includes a System Management Kernel ("SMK") module. The SMK module is responsible for handling the SM services.

The process 500 begins at step 502. The process 500 determines if it has received an fieldbus message stack service notification. If the process 500 has received such a notification, the process 500 advances to step 506 where the process 500 responds with the appropriate data in accordance with the emulated device and exits. Otherwise, the process 500 determines if it has received an SM service notification at step 504. If the process 500 has received an SM service notification, the process 500 advances to step 508 in which the process 500 responds with the appropriate data in accordance with the emulated device and exits. Otherwise, the process 500 exits.

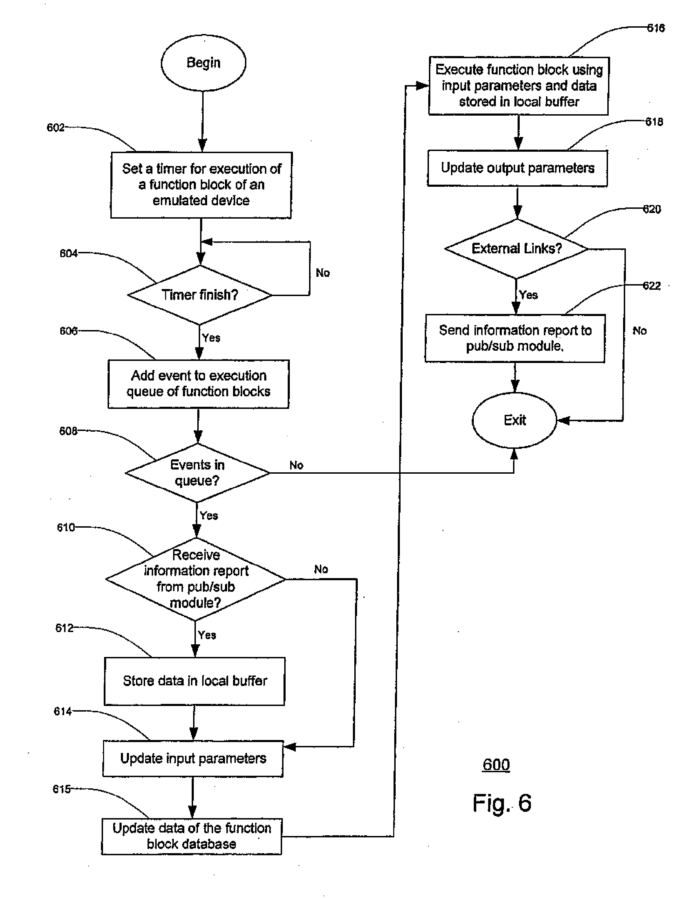

Fig. 6 illustrates an exemplary function block schedule and execution process 600 according to the present invention. As with other exemplary processes 300, 400, 500, 700 and 800 according to the present invention, various instances of the function block schedule and execution process 600 may execute in a parallel or serial manner. For example, an instance of the function block schedule and execution process 600 may be executing at the same time in parallel for each of the function blocks of each of the emulated field devices. The function block schedule and execution process 600 manages the timing of and data for the execution of each of the function blocks of the emulated devices. The process 600 begins at step 602 by setting a timer for the execution of a particular function block of an emulated device. Once the timer completes its countdown at step 604, the process 600 advances to step 606. At step 606, the process 600 adds any pending events to the function block execution queue of the particular function block. Each function block is associated with a function block execution queue. The function block execution queue defines which events are to be operated on by the function block and the order of such operation.

At step 608, the process 600 determines whether additional events are in the function block execution queue. If no additional events are in the function block execution queue, the process 600 exits. Otherwise, the process 600 advances to step 610. At step 610 the process 600 determines whether it has received an information report from the publisher/subscriber process 600, sometimes referred to as the pub/sub module. If no information reports have been received, the process advances to step 614. If information reports have been received, the process 600 advances to step 612 and stores data conveyed by the information reports in the local buffer. When the function blocks execute, the data stored in the local buffer, among other data, is utilized by the function blocks. The process 600 updates input parameters of the function block at step 614 to represent an appropriate current value of the input parameters. Data located in the function block database is also updated by data taken from the acquisition database at step 615.

The function block executes at least one of the events stored in the function block execution queue at step 616. Following execution of the event, the process 600 updates output parameters of the function block by updating the acquisition database. At step 620, the process 600 determines whether there have been any external links. The external links which connect function blocks may be provided in different physical devices. The links may be used to transfer a function block output to a function block input. The function blocks may be located inside the same device or in different devices. When the function blocks are in the same device, it is preferable to configure a local link to transfer data,. When the function blocks are in different devices, it is preferable to configure a external link to transfer data.

External links can be used for the cyclic data exchange between field devices. If no external links have been received, the process 600 exits. Otherwise, the function block schedule and execution module 600 sends information report requests to the publisher/subscriber process 700 at step 622. Following transmission of the information report requests, the process 600 exits.

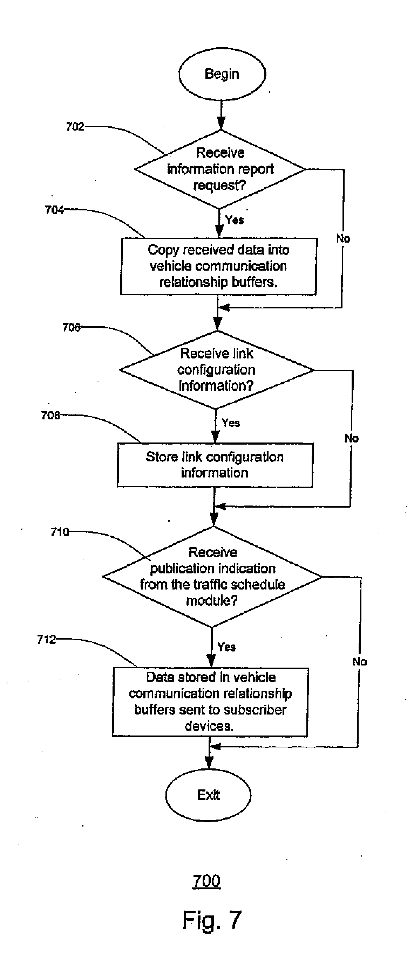

Fig. 7 illustrates an exemplary publisher/subscriber process 700 according to the present invention. As with other processes 300, 400, 500 and 600, various instances of the publisher/subscriber process 700 may execute in a parallel or serial manner. The publisher/subscriber process 700 manages information report requests received from the function block schedule and execution process 600 and published information reports to appropriate function blocks at the appropriate time as indicated by the traffic schedule process 800. The process 700 begins at step 702 when the process 700 determines whether an information report request has been received from the function block schedule and execution process 600. If no information report requests have been received, the process 700 advances to step 706. Otherwise, the process 700 module copies data relating to the information report request to VIRTUAL COMMUNICATION RELATIONSHIP buffers.

At step 706, the process 700 determines whether link configuration information has been received. During link configuration (which can be is written during the download of the configuration [control strategy] to the field device, the publisher/subscriber process 700 receives link configuration information relating to which device emulators should distribute publication information. The link configuration can occur at any time during the operation, and can be done during an on-line configuration download. It is possible to configure one side of the external link and also to configure the other side. The link configuration information can be stored at step 708 for later use by the process 700.

At step 710, the process 700 determines whether the process 700 received a publication indication from the traffic schedule module 800. If a publication indication is received from the traffic schedule process 800, the process 700 advances to step 712. At step 712 the process 700 publishes, i.e. sends, the data stored in the VIRTUAL COMMUNICATION RELATIONSHIP buffers to the subscribers. Publication may happen in various different manners, well known in the art.

According to an exemplary embodiment of the present invention, the destination of this publication is another emulated device. In this case, the publisher/subscriber process 700 sends an information report indication to the emulated device. According to another exemplary embodiment of the present invention, the designation of this publication is an HSE linking device. In this case, the HSE linking device can be connected to a function block, to an HSE network, and the like, meaning that the publisher/subscriber module 700 sends an information report indication to a local function block and in turn to the IDShell 210. According to a yet another exemplary embodiment of the present invention, the destinations of the publication are another emulated device, a function block of the HSE linking device and an HSE network. In this case, the publisher/subscriber module must send an information report indication to each subscriber: the emulated device, a local function block of the HSE linking device, and a local function block and in turn to the IDShell 210, respectively.

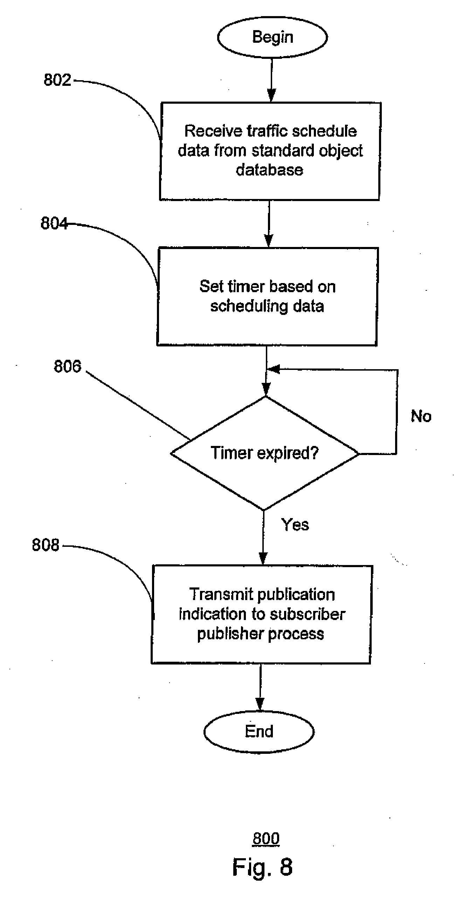

Fig. 8 illustrates an exemplary traffic schedule process 800 according to the present invention. As with other processes 300, 400, 500, 600, 700 and 800, various instances of the traffic schedule process 800 may execute in a parallel or serial manner. The traffic schedule process 800 can manage the timer control of the publication of information by the publisher/subscriber process 700. The process 800 informs the publisher/subscriber module 700 when to send information report indications received from the publishers (various function blocks that executed in accordance with the function block schedule and execution process 600) to the subscribers. The process 800 begins at step 802 when the traffic schedule process 800 reads traffic schedule data from the standard object dictionary database. Based on the traffic schedule data, the process 800 sets a timer to regulate when the publication indication is sent to the subscriber/publisher process 700. At step 806, the process 800 determines whether the timer has expired. If the timer has not expired, the process 800 continues to wait at step 806. Otherwise, the process 800 advances to step 808 where a publication indication is transmitted to the subscriber/publisher process 700. After the publication indication is sent to the publisher/subscriber process 700, the process 800 exits.

The VIRTUAL COMMUNICATION RELATIONSHIP manager device process 900 and the VIRTUAL COMMUNICATION RELATIONSHIP manager local process 1000 manage the VIRTUAL COMMUNICATION RELATIONSHIPS of the H1 field devices emulator module. In order to configure an external link is necessary the configuration of two link objects one for each end point and two VCR ( Virtual Communication Relationship).

It is possible to include an external link between a function block inside an emulated device and a local function block inside the linking device module 208 shown in Figure 2. The VCR of the emulated device which can be used to provide the communication path for this link may be managed by the VCR Manager Device. This device can initiate the connection establishment from the device side, based on the VCR and link object configuration. Such device can also manage the connection operation based on the changes of the VCR and Link configuration.

The VCR of the linking device used to provide the communication path for this link can be managed by the VCR Manager Local process. The linking device can initiate the connection establishment from the linking device side based on the VCR and link object configuration. Such device can also manage the connection operation based on the changes of the VCR and Link configuration. It is also possible to have an external link between a function block inside an emulated device and a function block inside another emulated device. In this case, all VCR can be managed by the VCR Manager Device process.

While the invention has been described in connection with preferred embodiments, it will be understood by those of ordinary skill in the art that other variations and modifications of the preferred embodiments described above may be made without departing from the true scope of the invention. Other embodiments will be apparent to those of ordinary skill in the art from a consideration of the specification or practice of the invention disclosed herein. It is intended that the specification and the described examples are considered as exemplary only, with the true scope and spirit of the invention indicated by the following claims.

## Claims

1. A system configured to allow at least one first device which is configured to use a first communication protocol to communicate with at least one second field device configured to use a second communication protocol, comprising:
a first network communication arrangement configured to communicate with the at least one first device using the first communication protocol;
a second network communication arrangement configured to communicate with the at least one second device using the second communication protocol; and
a device emulation processing arrangement configured to emulate the at least one second field device such that the at least one first device is capable of communicating with the emulated at least one second field device using a third communication protocol.

2. The system of claim 1, wherein the first communication protocol is a network protocol.

3. The system of claim 1, wherein the first communication protocol is one of a HART™ protocol, a FOUNDATION™ Fieldbus protocol and a PROFIBUS™ protocol.

4. The system of claim 1, wherein the first communication protocol is a 4-20mA analog communication protocol.

5. The field device of claim 1, wherein the first communication protocol is a digital communication protocol.

6. The field device of claim 1, wherein the device emulation processing arrangement includes at least one circuit, and wherein the at least one first field device is one of a temperature sensor, a pressure sensor, a flow rate sensor, a valve and a switch.

7. The field device of claim 1, wherein the second communication protocol is a network protocol.

8. The field device of claim 1, wherein the second communication protocol is a high speed ethernet protocol.

9. The field device of claim 1, wherein the third communication protocol is a FOUNDATION™ Fieldbus H1 protocol.

10. A method for allowing at least one second device configured to use a second communication protocol to communicate with at least one first field device configured to use a first communication protocol, comprising:
communicating with the at least one first field device using the first communication protocol;
emulating the at least one first field device; and
communicating with at least one second device using a second communication protocol, wherein the at least one second device may communicate with the at least one first field device using a third network protocol.

11. The method of claim 10, wherein the first communication protocol is a network protocol.

12. The method of claim 10, wherein the first communication protocol is one of a HART™ protocol, a FOUNDATION™ Fieldbus protocol and a PROFIBUS™ protocol.

13. The method of claim 10, wherein the first communication protocol is a 4-20mA analog communication protocol.

14. The method of claim 10, wherein the first communication protocol is a digital communication protocol.

15. The method of claim 10, wherein the second communication protocol is a network protocol.

16. The method of claim 10, wherein the second communication protocol is a high speed ethernet protocol.

17. The method of claim 10, wherein the third communication protocol is a FOUNDATION™ Fieldbus H1 protocol.
